Europäisches Patentamt

European Patent Office

Office européen des brevets

(11) Veröffentlichungsnummer: **0 099 529**
**A1**

(12) # EUROPÄISCHE PATENTANMELDUNG

(21) Anmeldenummer: 83106765.7

(22) Anmeldetag: 09.07.83

(51) Int. Cl.³: **F 16 L 47/06**
**F 16 L 21/02**

(30) Priorität: 17.07.82 DE 3226875

(43) Veröffentlichungstag der Anmeldung:
01.02.84 Patentblatt 84/5

(84) Benannte Vertragsstaaten:
AT BE CH DE FR GB IT LI LU NL SE

(71) Anmelder: WAVIN B.V.
Händellaan 251
NL-8031 EM Zwolle(NL)

(72) Erfinder: Guettouche, Ali
Johannesstrasse 7
D-4472 Haren 1(DE)

(72) Erfinder: Lodder, Bernhard
Baalder Esch 29
NL-7772 JW Hardenberg(NL)

(74) Vertreter: Busse & Busse Patentanwälte
Postfach 1226 Grosshandelsring 6
D-4500 Osnabrück(DE)

(54) Muffenrohrteil.

(57) Ein Muffenrohrteil (1) mit einer Sicke (3) enthält in dieser einen Dichtungsring (4) aus elastisch verformbarem Material, der in einer Innenausnehmung (10) einen Haltering (5) aufnimmt und einen in seiner Außenkontur der Kontur der Sicke (3) angepaßten Außenbereich (9) aufweist. Zur Erzielung einer verbesserten Dichtwirkung bei einer mit dem Muffenrohrteil (1) herzustellenden Rohrverbindung weist der Dichtungsring (4) in Einschubrichtung eines Einstekrohrteiles (6) gesehen einen axial vor dem Haltering (5) gelegenen vorderen Vorsprung (11), sowie einen axial hinter dem Haltering (5) angeordneten rückwärtigen Vorsprung (12) auf, die bei Einschieben des Einsteckrohrteiles (6) in Eingriff mit diesem je einen Druckansatz bilden, zwischen denen der Haltering (5) so im Mittelbereich des Dichtungsringes (4) angeordnet ist, daß der gesamte, sich über den beiden Druckansätzen und über dem Haltering (5) erstreckende Außenbereich (9) des Dichtungsringes (4) unter Kompressionsdruck an der Sicke (3) anliegt.

Fig.3

L/Ha

Muffenrohrteil

Die Erfindung betrifft ein Muffenrohrteil nach dem Oberbegriff des Patentanspruchs 1.

Bei bekannten Muffenrohrteilen dieser Art, die insbesondere aus Kunststoff wie Polyvinylchlorid bestehen, hat der in der Innenausnehmung des Dichtungringes angeordnete Haltering, der aus einem gegenüber dem des Dichtungsrings steiferen Material besteht, die Aufgabe, den werkseitig vormontierten Dichtungsring unverlierbar in der nach Art einer Ringnut ausgebildeten Sicke des Muffenrohrteils zu halten und die Montage der Rohrteile bei der Herstellung von Rohrverbindungen zu erleichtern.

Bei den bekannten Muffenrohrteilen mit hinter dem Haltering angeordnetem, als Druckansatz ausgebildetem Vorsprung des Dichtungsrings wird beim Einschieben eines Einsteckrohrteils ein lediglich einseitiger Kompressionsdruck auf den Dichtungsring hinter dem Haltering ausgeübt mit der Folge, daß der in seiner Außenkontur der Kontur der Sicke angepaßte Außenbereich des Dichtungsrings, über seine axiale Länge betrachtet, nur begrenzt und ungleichförmig in die Kontur der Sicke eingedrückt wird. Hieraus resultieren, wie gefunden wurde, Probleme in der Dichtungswirkung, zumal der bei den bekannten Muffenrohrteilen vorgesehene vordere Vorsprung des Dichtungsrings lediglich eine Führungsfunktion beim Einschieben des Einsteckrohrteils in das Muffenrohrteil erfüllt und keine Dichtungswirkung zwischen dem Einsteckrohrteil und dem Dichtungsring erbringt.

Der Erfindung liegt die Aufgabe zugrunde, ein Muffenrohrteil der eingangs angegebenen Art zu schaffen, bei dem der Dichtungsring eine verbesserte Dichtwirkung der Rohrverbindung entfaltet.

Diese Aufgabe wird nach der Erfindung durch eine Ausgestaltung gemäß dem Patentanspruch 1 gelöst. Bei dieser Ausgestaltung bewirken die von den beiden Vorsprüngen gebildeten Druckansätze eine besonders feste Einpressung des Dichtungsringes in die Sicke, wobei im Endergebnis der gesamte, sich über den beiden Druckansätzen und über dem Haltering erstreckende Außenbereich des Dichtungsringes unter Kompressionsdruck an der Sickenwand, deren Kontur eng folgend, anliegt. Es wird somit eine besonders hohe Dichtwirkung der hergestellten Rohrverbindung erreicht, und zwar insbesondere auch in Verbindung mit solchen Muffensicken, die im Querschnitt eine hohlkehlenartige Kontur mit sanften Bogenlinien aufweisen, die dem Außenbereich des Dichtungsringes an sich keine ausgeprägten Verankerungs- bzw. Gegenflächen für den Dichtungseingriff darbieten. Beim Einführen des Einsteckrohrteils in das Muffenrohrteil zur Herstellung der Rohrverbindung wird zunächst der axial vor dem Haltering gelegene vordere Vorsprung des Dichtungsringes unter Verformung bzw. Kompression in die Sicke gedrückt, wobei der Dichtungsring eine kurze axiale Vorbewegung ausführt. Im unmittelbaren Anschluß daran wird der rückwärtige Vorsprung des Dichtungsrings im Eingriff mit dem Einsteckrohrteil unter Verformung zusammengedrückt und überträgt wie der vordere Vorsprung einen Kompressionsdruck auf den Außenbereich des Dichtungsrings. Hiermit einher geht eine kurze axiale Rückwärtsbewegung des Dichtungsrings. Die auf diese Weise erzeugten gegenläufigen Bewegungen bzw. Druckkomponenten bewirken eine weitere Verbesserung der abdichtenden Einformung des Dichtungsrings in die Muffensicke.

In weiterer Ausgestaltung der Erfindung können die Innenausnehmung des Dichtungsringes gemäß Anspruch 2 und dessen vorderer und dessen rückwärtiger Vorsprung gemäß Anspruch 3 ausgebildet sein. Bei dieser Ausgestaltung ist der Haltering im im Muffenrohrteil vormontierten Zustand des Dichtungsrings an dessen innerem Umfang sichtbar in der Innenausnehmung gehalten und liegt im Einbauzustand bei Vereinigung eines Einsteckrohrteils und eines Muffenrohrteils in einem freien Abstand von der Wand des Einsteckrohrteils entsprechend der Dicke von Dichtungsmaterial des vorderen und ggf. des rückwärtigen Vorsprungs, das beim Verbindungsvorgang unter Verformung des oder der Vorsprünge randseitig zwischen die Außenseite des Einsteckrohrteils und die Innenfläche des Halterings gedrückt worden ist.

Demgegenüber ist bei einer anderen Ausgestaltung der Erfindung, wie sie grundsätzlich im Anspruch 6 gekennzeichnet ist, eine Anordnung getroffen, bei der der Haltering im im Muffenrohrteil vormontierten Zustand des Dichtungsrings praktisch unsichtbar in dessen Innenausnehmung gehalten ist und wobei insbesondere im Einbauzustand in einer Rohrverbindung die innere Dichtungslippe die Innenfläche des Halterings vollflächig übergreift und abdeckt.

Zahlreiche weitere Merkmale und Vorteile der Erfindung ergeben sich aus den weiteren Unteransprüchen und der nachstehenden Beschreibung in Verbindung mit der Zeichnung, in der mehrere Ausführungsbeispiele des Gegenstands der Erfindung veranschaulicht sind. In der Zeichnung zeigen:

Fig. 1          einen Axialschnitt durch eine von einem Muffenrohrteil und einem Einsteckrohrteil unter Ein-beziehung eines Dichtungsringes gebildete Rohrver-bindung,

Fig. 2          einen Axialschnitt durch einen Dichtungsring im unkomprimierten Zustand,

Fig. 3          den Dichtungsring nach Fig. 2 im komprimierten Zustand bei einer Rorhverbindung gemäß Fig. 1,

Fig. 4 u. 5 Darstellungen entsprechend den Fig. 2 und 3 zur Veranschaulichung eines anderen Ausführungsbeispiels und

Fig. 6 u. 7    je ein weiteres Ausführungsbeispiel eines Dichtungsringes in Darstellungen entsprechend den Fig. 2 und 4.

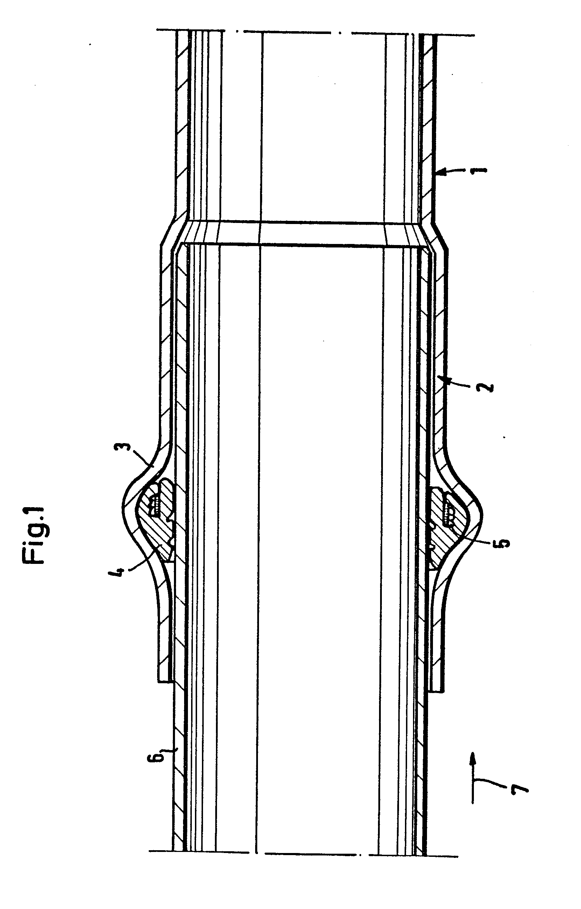

Die aus Fig. 1 ersichtliche Rohrverbindung umfaßt ein Muffenrohrteil 1 mit einer Muffe 2, deren Wandung mit einer ringförmig umlaufenden Sicke 3 versehen ist. In der Sicke 3 ist ein Dichtungsring 4 aus elastisch verformbarem Material, insbesondere Gummi oder einem gummielastischen Kunststoff, angeordnet, der durch einen Haltering 5 aus gegenüber dem des Dichtungsrings 4 steiferem Material, insbesondere aus einem halbstarren oder starren Kunststoff, in der Sicke 3 gehalten ist. Die Rohrverbindung umfaßt ferner ein Einsteckrohrteil 6, das in Richtung des Pfeils 7 in die Muffe 2 des Muffenrohrteils 1 angeschoben worden ist und dabei den Dichtungsring 4 zusammengedrückt hat, derart, daß dieser in die Sicke 3 zur Abdichtung der Rohrverbindung eingepreßt ist.

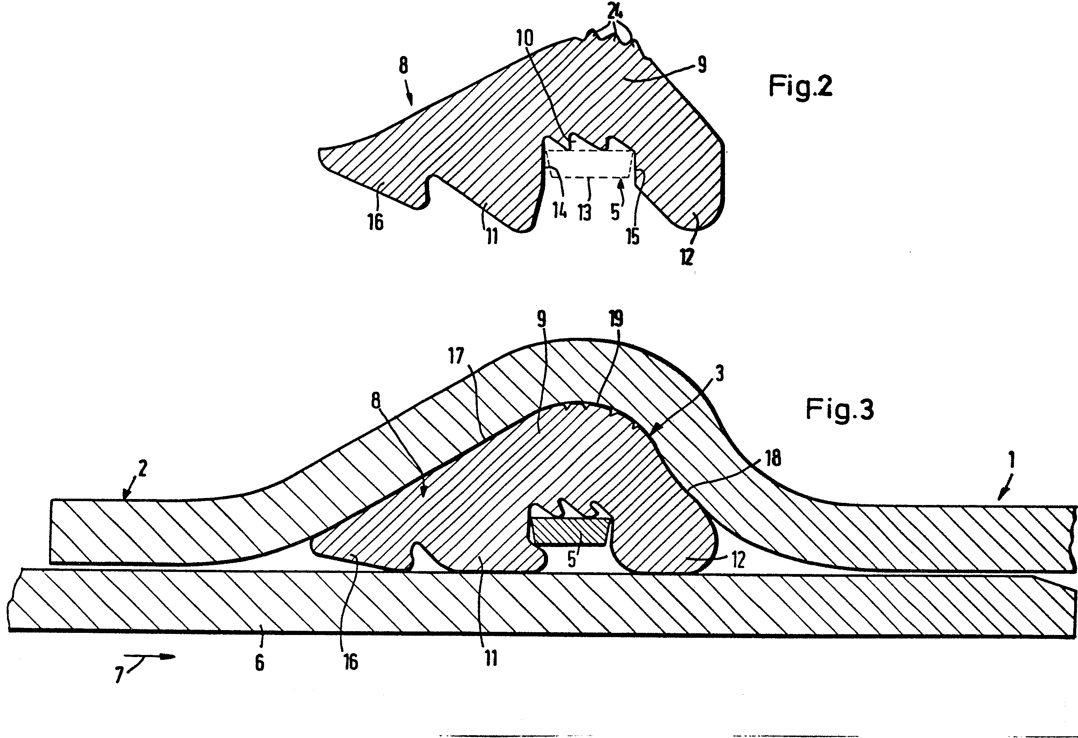

Anhand der Fig. 2 bis 7 sind verschiedene Ausführungsformen von Dichtungsringen in Darstellungen entsprechend der oberen Hälfte der Fig. 1 jedoch in gegenüber dieser vergrößertem Maßstab veranschaulicht, die bei der in Fig. 1 dargestellten Rohrverbindung Anwendung finden können.

Die Fig. 2 und 3 zeigen einen Dichtungsring 8 mit einem Außenbereich 9, der in seiner Außenkontur der Kontur der Sicke 3 angepaßt ist. In einer Innenausnehmung 10, deren Boden zur Aufnahme von Fertigungstoleranzen gezahnt ausgebildet ist, nimmt der Dichtungsring 8 den Haltering 5 auf. In Einschubrichtung 7 des Einsteckrohrteils 6 gesehen besitzt der Dichtungsring 8 einen axial vor dem Haltering 5 angeordneten vorderen Vorsprung 11 sowie einen axial hinter dem Haltering 5 gelegenen rückwärtigen Vorsprung 12. Die Innenausnehmung 10 des Dichtungsrings 8 ist zum Rohrinneren hin offen ausgebildet, so daß der in Fig. 2 gestrichelt eingezeichnete Haltering 5 im mit dem Dichtungsring 8 im Muffenrohrteil 1 vormontierten Zustand von innen sichtbar ist. In dem ferner aus Fig. 2 ersichtlichen unkomprimierten Zustand besitzen die beiden Vorsprünge 11 und 12 des Dichtungsringes 8 eine im wesentlichen radial zum Rohrinneren hin gerichtete, sich in ihrem über die innere Umfangsfläche 13 des Halterings 5 vorstehenden Bereich verjüngende Querschnittsform. Diese gewährleistet eine vom Haltering 5 unbeeinträchtigte Übertragung des von den Vorsprüngen aufgebrachten Kompressionsdrucks auf den Außenbereich 9 des Dichtungsrings oberhalb des Halterings.

Die axial vordere Endfläche 14 und die axial rückwärtige Endfläche 15 der Innenausnehmung 10 des Dichtungsrings 8 sind von einander gegenüberliegenden Stirnflächen des vorderen und des rückwärtigen Vorsprungs 11,12 gebildet. Im unkomprimierten Zustand des Dichtungsrings 8 ist wie Fig. 2 zeigt, das freie innere Ende des rückwärtigen Vorsprungs 12 im wesentlichen in der gleichen Umfangsebene wie das freie innere Ende des vorderen Vorsprungs 11 angeordnet. Der Dichtungsring ist ferner mit einem kurzen Führungsansatz 16 versehen, der dem vorderen Vorsprung 11 in Einschubrichtung 7 des Einsteckrohrteils 6 vorgeordnet ist und eine frühzeitige Fixierung des Dichtungsringes beim Einschieben des Einsteckrohrteils herbeiführt.

Beim Einschieben des Einsteckrohrteils 6 in Richtung des Pfeils 7 in die Muffe 2 des Muffenrohrteils 1 werden die Vorsprünge 11 und 12 durch ihren Eingriff mit dem Einsteckrohrteil 6 unter Verformung komprimiert und bilden Druckansätze, die den Dichtungsring 8 unter Kompressionsdruck in die Sicke 3 einpressen. Der Vorsprung 11 drückt dabei zunächst vornehmlich gegen die Sickenwand 17 und der Vorsprung 12 zunächst vornehmlich gegen die Sickenwand 18, wobei der Dichtungsring eine axiale Hin- und Herbewegung ausgeführt und gegeneinander gerichtete Kompressionsdruck-Komponenten oberhalb des Halterings 5 im Material des Dichtungsrings 8 erzeugt werden, die das Dichtungsmaterial seines Außenbereichs 9 insbesondere auch fest in den Grund 19 der Sicke 3 einpressen. Auf diese Weise liegt der gesamte, sich über den beiden Druckansätzen bzw. Vorsprüngen 11 und 12 und über dem Haltering 5 erstreckende Außenbereich 9 des Dichtungsrings 8 unter Kompressionsdruck abdichtend an der Sicke 3 an.

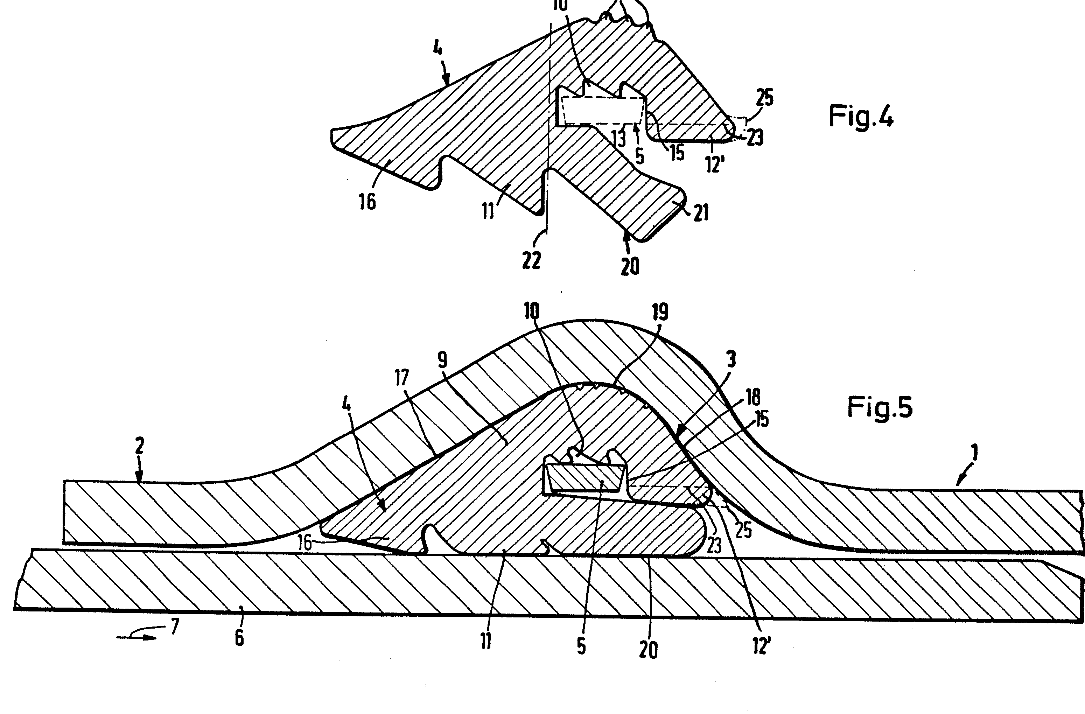

In den Fig. 4 und 5 ist der Haltering gemäß Fig. 1 als weitere Ausführungsform veranschaulicht, wobei zur Bezeichnung von mit Teilen des Dichtungsrings 8 nach den Fig. 2 und 3 übereinstimmenden Teilen gleiche Bezugszeichen verwendet werden. Der in der Innenausnehmung 10 angeordnete Haltering 5 ist bei diesem Ausführungsbeispiel an seiner inneren Umfangsfläche 13 von einer inneren Dichtungslippe 20 übergriffen, die sich vom vorderen Vorsprung 11 zum rückwärtigen Vorsprung 12' hin erstreckt, der in seiner radial einwärts gerichteten Erstreckung gegenüber dem Vorsprung 12 nach den Fig. 2 und 3 verkürzt ist. Die Dichtungslippe 20 wirkt im Eingriff mit dem Einsteckrohrteil 6 endseitig als Druckübertragungsglied mit dem Vorsprung 12' zusammen und ist hierzu in ihrem rückwärtigen Endbereich 21 mit einer zum Vorsprung 12' hin gerichteten wulstförmigen Verdickung versehen. Die in radialer Richtung gemessene Dicke des rückwärtigen Endbereichs 21 der inneren Dichtungslippe 20 zuzüglich der des Überstands des Vorsprungs 12' gegenüber der inneren Umfangsfläche 13 des Halterings 5 ist hierbei im wesentlichen gleich der zum Rohrinneren hin gerichteten Radialerstreckung des vorderen Vorsprungs 11 gegenüber der inneren Umfangsfläche 13 des Halterings 5.

Die axiale Länge des vorderen Vorsprungs 11 des Dichtungsrings 4 reicht höchstens bis zu einer das ihm zugewandte Ende des Halterings 5 enthaltenden Radialebene. In Fig. 4 ist die Radialebene, in der das rückwärtige Ende des Vorsprungs 11 liegt, strichpunktiert veranschaulicht und mit 22 bezeichnet. Die innere Dichtungslippe 20 ist dabei etwa in Höhe der Radialebene 22 an den Dichtungsring 4 angeformt.

Bei der Herstellung der in der Fig. 5 im auf den Sickenbereich beschränkten Umfang gezeigten Rohrverbindung unter Einschieben des Einsteckrohrteils 6 in Pfeilrichtung 7 in die Muffe 2 des Muffenrohrteils 1 kommt die innere Dichtungslippe 20 mit dem Einsteckrohrteil 6 in Dichtungseingriff und bewirkt unter Verformung eine Gegeneinanderlage ihres rückwärtigen Endbereichs 21 in der Zone der dort vorgesehenen wulstförmigen Verdickung mit dem freien Endteil des Vorsprungs 12' an dessen Endfläche. In dem aus Fig. 5 ersichtlichen Einbauzustand des Dichtungsrings 4 ist daher der Haltering 5 von der inneren Dichtungslippe 20 axial übergriffen.

Das Kompressionsdruckverhalten des Dichtungsrings 4 bzw. seine Einpressung in die Sicke 3 zur Abdichtung der Rohrverbindung sind analog dem Ausführungsbeispiel nach den Fig. 2 und 3, da die Dichtungslippe 20 mit ihrer endseitigen wulstförmigen Verdickung als Druckübertragungsglied wirkt, so daß der gegen die Sickenwand 18 gedrückte Druckansatz 12' wiederum eine rückwärtsgerichtete Druckkomponente im Dichtungsmaterial erzeugt. Zugleich wird auch wieder der Vorsprung 11 gegen die Sickenwand 17 gedrückt und eine vorwärts gerichtete Druckkomponente erzeugt, so daß die von den Vorsprüngen 11 und 12' aufgebrachten, gegeneinander gerichteten Druckkomponenten oberhalb des Halterings 5 wiederum die gewünschte stramme Einpressung des Außenbereichs 9 des im übrigen während des Einführens des Einsteckrohrteils 6 kurz vor- und zurückbewegten und sich dadurch besser einschmiegenden Dichtungsrings 4 in die Sicke 3 und insbesondere in den Sickengrund 19 bewirken.

Eine vom Haltering 5 ungehinderte Übertragung des vom vorderen Vorsprung 11 aufgebrachten Kompressionsdrucks in den Dichtungsringbereich oberhalb des Halterings 5 ist hierbei dadurch erreicht, daß die Radialebene 22, in der der Vorsprung 11 axial endet, noch vor der ihm zugewandten Stirnfläche des Halterings 5 liegt. In gleicher Weise liegt der Vorsprung 12' vor der diesem zugewandten Stirnfläche des Halterings 5, so daß auch der vom Drucksansatz bzw. Vorsprung 12' aufgebrachte Druck ungehindert in den Dichtungsbereich oberhalb des Halterings 5 übertragen werden kann. Für eine noch weiter verbesserte, die rückwärtige Sickenwand 18 tiefer erfassende Einpressung des Dichtungsrings 4 in die Sicke 3 kann der rückwärtige Druckansatz 12' mit einem anfänglich leicht nach außen gebogenen Randansatz versehen sein, wie es in den Fig. 4 und 5 bei 25 strichpunktiert veranschaulicht ist.

Im übrigen kann der Vorsprung 12' im Bereich seiner Berührungsfläche mit dem Endbereich 21 der inneren Dichtungslippe 20 mit Kanälen 23 versehen sein, die im zusammengepreßten Zustand des Dichtungsrings 4 eine Verbindung zwischen der Innenausnehmung 10 und dem im Betrieb unter Druck stehenden Rohrinneren herstellen, der im Sinne einer zusätzlichen Anpressung des Außenbereiches 9 des Dichtungsrings 4 an die Sickenwandung wirkt.

Bei den Ausführungsbeispielen nach den Fig. 1 bis 5 ist der Dichtungsring 4 bzw. 8 in Verbindung mit einer in axialer Richtung unsymmetrisch ausgebildeten Sicke 3 vorgesehen, bei der, wie an sich bekannt, die vordere Sickenwand 17 unter einem schwachen Winkel geneigt und die rückwärtige Sickenwand 18 demgegenüber in einem steileren Winkel geneigt ist. In diesem Fall ist der Haltering 5 innerhalb des Dichtungsrings 4 bzw. 8 mit seiner Mittelebene von der Sickenmitte zur Sickenwand 18 hin versetzt angeordnet.

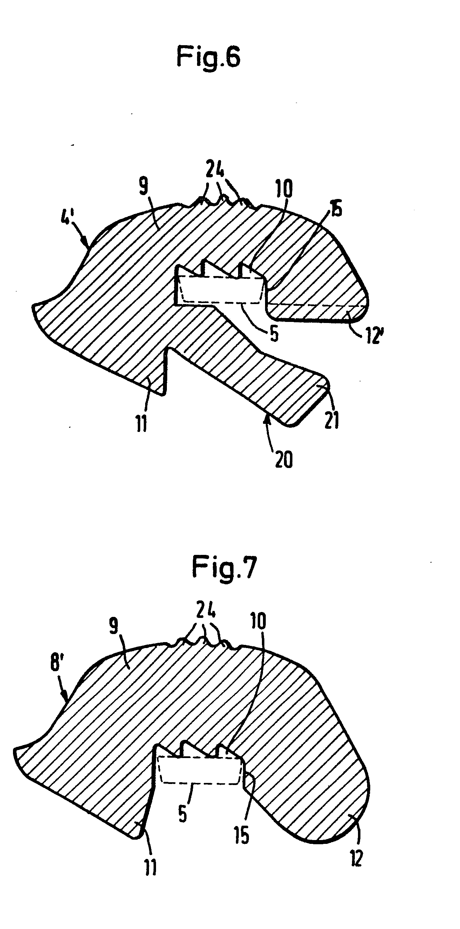

Die Fig. 6 und 7 zeigen Abwandlungen des Dichtungsringes 4 bzw. 8, die zur Verwendung in in axialer Richtung symmetrisch ausgebildeten Sicken geeignet sind. Hierbei ist der Haltering 5 jeweils mit seiner Mittelebene in der Symmetrieebene der Sicke angeordnet, deren Form aus der der Sickenkontur folgenden Außenkontur des Außenbereichs 9 des Dichtungsrings 4' bzw. 8' ersichtlich ist. Im übrigen entsprechen die Dichtungsringe 4' und 8' nach den Fig. 6 und 7 in allen wesentlichen Teil den Dichtungsringen 4 und 8 gemäß den Fig. 1 bis 5, wobei lediglich in beiden Fällen der vordere Führungsansatz 16 der Dichtungsringe 4 und 8 bei den Dichtungsringen 4' und 8'

- 9 -

in Fortfall gekommen ist.

Sämtlichen Ausführungsformen ist gemeinsam, daß der rückwärtige Vorsprung 12 bzw. 12' des Dichtungsringes 4,4' bzw.
8,8' in dem Haltering 5 benachbarten Bereich verdickt ist und
seine die rückwärtige Endfläche 15 der Innenausnehmung 10
bildende Stirnfläche im wesentlichen radial verläuft. Hierdurch
besitzt der Dichtungsring zusammen mit dem Haltering 5 aufgrund der vermehrten endseitigen Masse des Vorsprungs 12,12'
eine Sicherheit gegen ein ungewolltes Herausziehen aus der
Sicke 3, insbesondere, wenn , wie bei den dargestellten bevorzugten Ausführungsbeispielen vorgesehen, der Haltering 5 eine
trapezförmige Querschnittsgestalt mit am Boden der Innenausnehmung 10 angeordneter längerer Grundlinie aufweist. Der
Haltering 5 kann sich dadurch mit seiner oberen, dem Vorsprung 12,12' zugewandten Umfangskante unter Druckbeanspruchung
in das Material des Dichtungsrings eindrücken und ist so gegen
ein Herausziehen gesichert.

Die axiale Länge des Halterings 5 liegt bei sämtlichen Ausführungsbeispielen etwa im Bereich von 20 bis 40% der axialen
Länge der Sicke 3, was einerseits eine sichere Festlegung des
Dichtungsrings in der Sicke in seinem vormontierten Zustand
im Muffenrohrteil 1 gewährleistet, andererseits aber auch eine
vom Haltering 5 möglichst unbeeinträchtigte Kompressionsdruckübertragung in den Außenbereich 9 des Dichtungsrings im
Einbauzustand in der Rohrverbindung sicherstellt.

Allen Ausführungsformen gemeinsam ist ferner das Merkmal, daß
der Außenbereich 9 des Dichtungsrings 4,4' und 8,8' an seiner
Außenseite mit elastisch verformbaren Rippen 24 versehen ist,
die bei den dargestellten Ausführungsbeispielen auf einen
axialen Längenbereich beschränkt sind, der im wesentlichen dem
dem Grund 19 der Sicke 3 gegenüberliegenden Teil des Außenbereichs 9 des Dichtungsrings entspricht. Diese Rippen 24 können
sich unter dem bei der Herstellung der Rohrverbindung erzeugten Kompressionsdruck in ggf. im Sickengrund 19 vorhandene Schmutzpartikel unter Verformung eingraben und tragen so insgesamt zu einer satten Anlage des Außenbereiches 9 des Dichtungsrings an der Sickenwand ihrerseits bei.

Der Haltering 5 ist bei allen Ausführungsformen zweckmäßig in einem Bereich des Dichtungsringes 4,4',8,8' angeordnet, der innerhalb der mittleren Umfangsebene des Dichtungsrings liegt. Hierdurch ist gewährleistet, daß der Außenbereich 9 des Dichtungsrings eine ausreichende Dichtungsmasse besitzt.

Das Muffenrohrteil 1 besteht in der Regel aus Kunststoff, z.B. aus Polyvinylchlorid, kann jedoch auch aus anderen geeigneten Materialien, z.B. Metall, Ton oder Beton, bestehen.

Patentansprüche:

1. Muffenrohrteil mit einer Sicke und einem in dieser angeordneten Dichtungsring aus elastisch verformbarem Material, der in einer Innenausnehmung einen Haltering aufnimmt, einen in seiner Außenkontur der Kontur der Sicke angepaßten Außenbereich aufweist und in Einschubrichtung eines Einsteckrohrteils gesehen einen axial vor dem Haltering gelegenen vorderen Vorsprung sowie einen axial hinter dem Haltering angeordneten rückwärtigen Vorsprung aufweist, von denen der rückwärtige Vorsprung bei Einschieben des Einsteckrohrteils in Eingriff mit diesem einen Druckansatz bildet, der in seinem Bereich den Dichtungsring unter Kompressionsdruck an den ihm gegenüberliegenden Teil der Sicke andrückt, dadurch gekennzeichnet, daß auch der vordere Vorsprung (11) als Druckansatz ausgebildet und der Haltering (5) derart zwischen den beiden Druckansätzen im Mittelbereich des Dichtungsringes (4;4';8;8') angeordnet ist, daß der gesamte, sich über den beiden Druckansätzen und über dem Haltering erstreckende Außenbereich (9) des Dichtungsringes unter Kompressionsdruck an der Sicke (3) anliegt.

2. Muffenrohrteil nach Anspruch 1, dadurch gekennzeichnet, daß die Innenausnehmung (10) des Dichtungsringes (8,8') zum Rohrinneren hin offen ausgebildet ist.

3. Muffenrohrteil nach Anspruch 2, dadurch gekennzeichnet, daß der vordere Vorsprung (11) und der rückwärtige Vorsprung (12) des Dichtungsringes (8;8') im unkomprimierten Zustand eine im

-12-

wesentlichen radial zum Rohrinneren hin gerichtete, sich in ihrem über die innere Umfangsfläche (13) des Halteringes (5) vorstehenden Bereich verjüngende Querschnittsform besitzen.

4.    Muffenrohrteil nach Anspruch 2 oder 3, dadurch gekennzeichnet, daß die axial vordere und die axial rückwärtige Endfläche (14,15) der Innenausnehmung (10) des Dichtungsrings von einander gegenüberliegenden Stirnflächen des vorderen und des rückwärtigen Vorsprungs (11,12) gebildet sind.

5.    Muffenrohrteil nach einem der Ansprüche 1 bis 4, dadurch gekennzeichnet, daß im unkomprimierten Zustand des Dichtungsringes (8;8') das freie innere Ende des rückwärtigen Vorsprungs (12) im wesentlichen in der gleichen Umfangsebene wie das freie innere Ende des vorderen Vorsprungs (11) angeordnet ist.

6.    Muffenrohrteil nach Anspruch 1, dadurch gekennzeichnet, daß der in der Innenausnehmung (10) des Dichtungsrings (4;4') angeordnete Haltering (5) an seiner inneren Umfangsfläche (13) von einer inneren Dichtungslippe (20) übergriffen ist, die sich vom vorderen zum rückwärtigen Vorsprung (11,12') hin erstreckt und mit diesem endseitig als Drucküberträgungsglied zusammenwirkt.

7.    Muffenrohrteil nach Anspruch 6, dadurch gekennzeichnet, daß die Dichtungslippe (20) in ihrem rückwärtigen Endbereich (21) mit einer zum rückwärtigen Vorsprung (12') hin gerichteten wulstförmigen Verdickung versehen ist.

8.    Muffenrohrteil nach Anspruch 6 oder 7, dadurch gekennzeichnet, daß die in radialer Richtung gemessene Dicke des rückwärtigen Endbereichs (21) der inneren Dichtungslippe (20) zuzüglich der eines Überstands des rückwärtigen Vorsprungs (12') gegenüber der inneren Umfangsfläche (13) des Halterings (5) im wesentlichen gleich der zum Rohrinneren gerichteten Radialerstreckung des vorderen Vorsprungs (11) gegenüber der inneren Umfangsfläche (13) des Halterings (5) ist.

9.     Muffenrohrteil nach einem der Ansprüche 6 bis 8, dadurch gekennzeichnet, daß die axiale Länge des vorderen Vorsprungs (11) des Dichtungsrings (4;4') höchstens bis zu einer das ihm zugewandte Stirnende des Halterings (5) enthaltenden Radialebene reicht.

10.    Muffenrohrteil nach den Ansprüchen 6 und 9, dadurch gekennzeichnet, daß die innere Dichtungslippe (20) etwa in Höhe der dem vorderen Stirnende des Halterings (5) benachbarten Radialebene (22) des Dichtungsrings (4;4') an diesen angeformt ist.

11.    Muffenrohrteil nach einem der Ansprüche 1 bis 10, dadurch gekennzeichnet, daß der rückwärtige Vorsprung (12;12') des Dichtungsrings (4;4';8;8') in seinem dem Haltering (5) benachbarten Bereich verdickt ist und seine die rückwärtige Endfläche (15) der Innenausnehmung (10) bildende Stirnfläche im wesentlichen radial verläuft.

12.    Muffenrohrteil nach einem der Ansprüche 1 bis 11, dadurch gekennzeichnet, daß der Haltering (5) eine trapezförmige Querschnittsgestalt mit am Boden der Innenausnehmung (10) angeordneter längerer Grundlinie aufweist.

13.    Muffenrohrteil nach einem der Ansprüche 1 bis 12, dadurch gekennzeichnet, daß die axiale Länge des Halteringes (5) etwa 20 bis 40% der axialen Länge der Sicke (3) beträgt.

14.    Muffenrohrteil nach einem der Ansprüche 1 bis 13, dadurch gekennzeichnet, daß der Haltering (5) bei in axialer Richtung symmetrischer Ausbildung der Sicke mit seiner Mittelebene in der Symmetrieebene der Sicke angeordnet ist.

15.    Muffenrohrteil nach einem der Ansprüche 1 bis 13, da-

-14-

durch gekennzeichnet, daß der Haltering (5) bei in axialer Richtung unsymmetrischer Ausbildung der Sicke (3) mit einer unter einem schwachen Winkel geneigten vorderen Sickenwand (17) und einer dieser gegenüber um einen steileren Winkel geneigten rückwärtigen Sickenwand (18) mit seiner Mittelebene zur letzteren hin versetzt angeordnet ist.

16.    Muffenrohrteil nach einem der Ansprüche 1 bis 15, dadurch gekennzeichnet, daß der Außenbereich (9) des Dichtungsrings (4;4';8;8') an seiner Außenseite mit elastisch verformbaren Rippen (24) versehen ist.

17.    Muffenrohrteil nach einem der Ansprüche 1 bis 16, dadurch gekennzeichnet, daß die Rippen (24) auf einen axialen Längenbereich beschränkt sind, der im wesentlichen dem Grund (19) der Sicke (3) gegenüberliegt.

18.    Muffenrohrteil nach einem der Ansprüche 1 bis 17, dadurch gekennzeichnet, daß dem vorderen Vorsprung (11) des Dichtungsrings (4;8) in Einschubrichtung (7) des Einsteckrohrteils (6) ein Führungsansatz (16) vorgeordnet ist.

# Fig.1

Fig.2

Fig.3

2/4

0099529

Fig.4

Fig.5

Fig.6

Fig.7

| | | | |
|---|---|---|---|
| | Europäisches Patentamt | **EUROPÄISCHER RECHERCHENBERICHT** | Nummer der Anmeldung |

## EINSCHLÄGIGE DOKUMENTE

EP 83106765.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE - A1 - 2 925 412 (FORSHEDA) <br> * Gesamt * <br><br> -- | 1,4, 11,13, 15 | F 16 L 47/06 <br> F 16 L 21/02 |
| X | GB - A - 2 016 630 (WAVIN B.V.) <br> * Gesamt * <br><br> -- | 1-4,6, 11,13, 14 | |
| P,A | AT - B - 367 884 (WAVIN B.V.) <br> * Fig. 11,12 * <br><br> -- | 1,2,6, 7,13 | |
| A | US - A - 4 299 412 (PARMANN) <br> * Fig. 1-12 * <br><br> ---- | 1,13 | |

**RECHERCHIERTE SACHGEBIETE (Int. Cl. ³)**

F 16 L 21/00
F 16 L 47/00
F 16 L 49/00

Der vorliegende Recherchenbericht wurde für alle Patentansprüche erstellt.

| Recherchenort | Abschlußdatum der Recherche | Prüfer |
|---|---|---|
| WIEN | 06-09-1983 | SCHUGANICH |